Europäisches Patentamt

European Patent Office

Office européen des brevets

(11) Veröffentlichungsnummer: **0 042 071**
**B1**

(12) **EUROPÄISCHE PATENTSCHRIFT**

(45) Veröffentlichungstag der Patentschrift: **30.10.85**

(21) Anmeldenummer: **81103806.6**

(22) Anmeldetag: **18.05.81**

(51) Int. Cl.⁴: **H 04 N 1/00,** G 06 F 15/20, G 06 K 9/60

(54) **An eine Datenverarbeitungsanlage oder einen Textbearbeitungsautomaten angeschlossenes Mehrzweck-Endgerät.**

(30) Priorität: **21.05.80 DE 3019480**

(43) Veröffentlichungstag der Anmeldung:
**23.12.81 Patentblatt 81/51**

(45) Bekanntmachung des Hinweises auf die Patenterteilung:
**30.10.85 Patentblatt 85/44**

(84) Benannte Vertragsstaaten:
**BE CH FR GB IT LI NL SE**

(56) Entgegenhaltungen:
**DE-A-2 737 335**
**FR-A-2 418 588**
**US-A-3 751 582**
**US-A-3 898 470**
**US-A-4 005 933**
**US-A-4 026 642**
**US-A-4 169 275**

**IBM TECHNICAL DISCLOSURE BULLETIN,
Band 15, Nr. 10, März 1973, Seiten 3259-3260
New York, U.S.A. R.A. THORPE: "Triple function box"**

(73) Patentinhaber: **Siemens Aktiengesellschaft
Berlin und München Wittelsbacherplatz 2
D-8000 München 2 (DE)**

(72) Erfinder: **Cutter, David, Dr.
Zehntfeldstrasse 117
D-8000 München 82 (DE)**
Erfinder: **Unterberger, Hans, Dr.
Groschenweg 48 a
D-8000 München 82 (DE)**

(56) Entgegenhaltungen:
**JUJITSU SCIENTIFIC & TECHN. JNAL, Band 16,
Nr. 1, März 1980, Seiten 39-55 Kawasaki, JP. I.
KONDO et al.: "High-speed laser printer"**

## Beschreibung

Die vorliegende Erfindung betrifft ein Mehrzweck-Endgerät mit einer Eingabe- und Steuertastatur zum Anschluß an eine Datenverarbeitungsanlage und/oder einen Textbearbeitungsautomaten. Das erfindungsgemäße Mehrzweck-Endgerät stellt eine technische Einrichtung dar, die im wesentlichen zum Erstellen sogenannter Hardcopy-Unterlagen dient.

Hardcopy-Ausgabegeräte sind an sich bekannt. In ihnen werden eingegebene Originale optisch auf einer sich auf einer Trommel befindenden lichtempfindlichen Oberfläche abgebildet, die nach dem Belichten nacheinander eine Tonerstation und eine Übergabe auf das Papier durchläuft, das seinerseits anschließend eine Fixieroder Einbrennstation passiert. Die gewonnenen Kopien kommen damnach ausschließlich auf optischem bzw. optisch-elektrostatischem Wege zustande. Ein Zusammenwirken solcher bekannter Hardcopy-Ausgabegeräte mit beispielsweise einem Textbearbeitungsautomaten ist aus naheliegenden Gründen nicht ohne weiteres möglich.

Im Zuge der ständig zunehmenden Büroautomatisierung besteht ein Bedarf für ein vielsietig verwendbares Hardcopy-Ausgabegerät, mittels dessen über die Funktionen herkömmlicher Geräte hinaus zusätzliche Funktionen, wie Fernkopieren, Fernschrieben, Plotten, Drucken erfüllt werden können. Ein solches Gerät wäre bei einem Zusammenwirken mit einem Textbearbeitungsautomaten sogar dazu in der Lage, im beschränkten Umfang das Bearbeiten von Textvorlagen oder auch beispielsweise graphischen Vorlagen zu ermöglichen.

Aus der US—A—3 898 470 ist ein Mehrzweck-Endgerät bekannt, das sich zum Anschluß an eine Datenverarbeitungs- und/oder Textbearbeitungsanlage eignet, bei dem eine Eingabeeinrichtung mit einer Hardcopy-Eingabe zum Eingeben eines Originals und mit einer Abzweigung, mittels derer die in Gestalt des Originals vorliegende optische Information sowohl an eine Ausgabeeinrichtung mit einer Hardcopy-Ausgabe zum Ausgeben von Lokalkopien als auch an eine Abtastvorrichtung zur weiteren Bearbeitung bzw. Übertragung dieser optischen Information weitergeleitet wird, vorgesehen ist, über die das Mehrzweck-Endgerät auch mit einem Kommunikationsnetz verbindbar ist.

Aus der Druckschrift IBM Technical Disclosure Bulletin, Band 15, Nr. 10, März 1973, S. 3259—3260, ist eine Dreifach-Funktionseinrichtung der genannten Art bekannt, die ein Interface-Teil aufweist, das über ein Modem Verbindungen zu einem Kommunikationsnetz herstellt und mittels diverser Verknüpfungsschaltungen die Eingabe und/oder. Ausgabe steuert sowie in einem Pufferspeicher Daten abspeichert oder puffert.

Aus der US—A—4 005 933 ist eine Kopier- und Telekopiereinrichtung bekannt, das als Mehrzweckgerät betrieben werden kann und u.a. Dokumente analysieren und reproduzieren kann.

Der vorliegenden Erfindung liegt die Aufgabe zugrunde, ein Mehrzweck-Endgerät zu schaffen, das die weiter oben genannten Funktionen bedarfsweise erfüllen kann. Es soll darüber hinaus sog. Lokalkopien mit hoher Qualität wirtschaftlich herstellen können. Mechanische Umstellungen wie bei herkömmlichen Geräten, z.B. durch Verstellung der Objektive auf die eine oder andere einer der genannten Funktionen entsprechenden Betriebsweise sollen aufgabengemäß ebenfalls nicht erforderlich sein. Schließlich soll das angestrebte Mehrzweck-Endgerät einen Kompakten Aufbau haben und zuverlässig und wirtschaftlich betrieben werden können, und es soll eine hohe Abtast- und Kopiergeschwindigkeit haben sowie an die verschiedenen Übertragungsgeschwindigkeiten verschiedener Netze anpaßbar sein.

Die der Erfindung zugrundeliegende Aufgabe wird durch ein Mehrzweck-Endgerät mit einer Eingabe- und Steuertastatur zum Anschluß an eine Datenverarbeitungsanlage und/oder einen Textbearbeitungsautomaten gemäß dem Oberbegriff des Patentanspruchs 1 gelöst, das durch die in dessen kennzeichnenden Teil angegebenen Merkmale charakterisiert ist.

Mit des erfindungsgemäßen Mehrzweck-Endgerät können vorteilhafterweise wahlweise Funktionen der unterschiedlichen Art wie Lokalkopieren, Fernkopieren, Fernschreiben, Plotten, Drucken und im bechränkten Umfang auch das Bearbeiten von Vorlagen ausgeführt werden. Vorteilhafterweise sind keine mechanischen Umstellungen von Betriebsart zu Betriebsart erforderlich, da die Umschaltungen gemäß der Konzeption des erfindungsgemäßen Mehrzweck-Endgerätes auf elektronischem Wege vorgenommen werden können. Vorteilhaft ist außerdem, daß durch die Verwendung von Abbildungsoptiken eine bessere Auflösung erreicht und Verschmutzung der optischen Oberflächen durch Toner aufgrund des Abstandes zur Trommel vermieden wird.

Weiterbildungen der Erfindung sind durch die in den Unteransprüchen angegbenen Merkmale gekennzeichnet.

Im folgenden wird die Erfindung anhand mehrerer, Ausführungsbeispiele für die Erfindung betreffender Figuren im einzelnen erläutert.

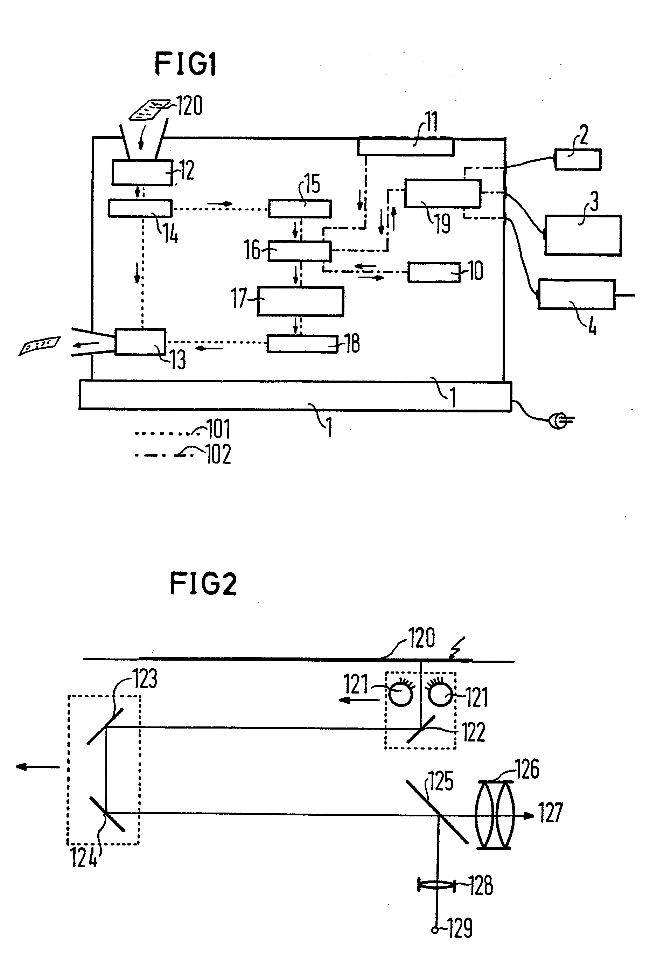

Fig. 1 zweigt das Blockschaltbild des erfindungsgemäßen Mehrzweck-Endgerätes 1 mit einer Hardcopy-Eingabe 12 zum Eingeben von Originalen 120, einer Abzweigung 14, einer Hardcopy-Ausgabe 13 zum Ausgeben von Kopien, einer Abtastvorrichtung 15, einer Steuerung 16, einer Decoder/Treiber-Einrichtung 17, einer Rasterzeile 18, einer Eingabe-/Ausgabeschnittstelle 19, einem Speicher 10 sowie einer Eingabe- und Steuertastatur 11 und externen Geräten bzw. Einrichtungen wie einer Datenverarbeitungsanlage 2, einem Textbearbeitungsautomaten 3 und einem Kommunikationsnetz 4.

Fig. 2 zeigt schematisch die Anordnung eines herkömmlichen Hardcopy-Geräts mit einer aus Lampen 121 und einem ersten Spiegel 122 bestehenden Abtasteinrichtung für die Kopien 120 und einem Schlitten zum Ausgleich der optischen Wege, bestehend aus einem zweiten Spiegel 123 und einem dritten Spiegel 124, das erfindungsgemäß durch einen Strahlteiler 125, ein Hauptobjektiv 126 und ein Abtastobjektiv 128 ergänzt ist.

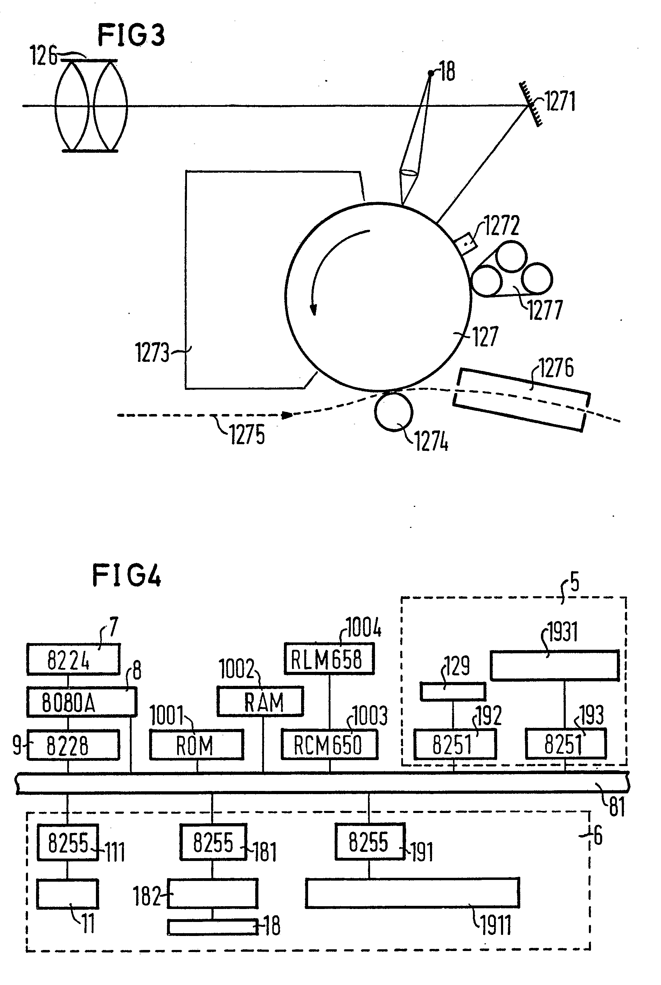

Fig. 3 zeigt schematisch die auf das Hauptobjektiv 126 folgende erfindungsgemäße Anordnung im Zusammenhang mit aus bekannten Hardcopy-Geräten hervorgehenden Einzelheiten, nämlich einem sog. Corotron 1272 zum Aufbringen einer Ladung auf eine Trommel 127, einem Spiegel der Hardcopy-Ausgabe 1271, über den optische Information auf die Trommel übertragen wird, bei der bekannterwiese eine Tonerstation 1273, eine Übergabestation 1274, eine Fixierstation 1276, durch die ein Papiervorrat 1275 läuft, sowie eine Trommelreinigungsanordnung 1277 vorgesehen sind. Außerdem zeigt Fig. 3 eine erfindungsgemäße Rasterzeile 18.

Fig. 4 zeigt das Blockschaltbild aller elektronischen Einrichtungen des erfindungsgemäßen Mehrzweck-Endgeräts, nämlich einen Taktgenerator 7, einen Mikroprozessor 8, einen Systemcontroller 9, einen Programmspeicher 1001, einen Daten- oder Pufferspeicher 1002, einen Magnetblasenspeicher 1004 mit zugehöriger Steuerung 1003, eine Seriell-Eingabe/Ausgabeschnittstelle 5 mit einer Abtastzeile 129 in Verbindung mit einem ersten Kommunikations-Interface 192 eine weitere Seriell-Eingabe/Ausgabe-Schnittstelle 1931 in Verbindung mit einem zweiten Kommunikations-Interface 193, eine Parallel-Eingabe/Ausgabeschnittstelle 6, bestehend aus einer Eingabeund Steuertastatur 11 im Zusammenhang mit einem ersten Peripherie-Interface 111, eine Rasterzeile 18 in Verbindung mit einer Decoder/Treiber-Elektronik 182 und einem zweiten Peripherie-Interface 181 sowie eine 8-Bit-Parallel-Eingabe/Ausgabe-Schnittstelle 1911 in Verbindung mit einem dritten Peripherie-Interface 191, wobei die Einrichtungen 5, 6, 9, 1001, 1002 und 1003 über einen Bus 81 miteinander kommunizieren können.

Wie bereits erläutert, zweigt Fig. 1 das Blockschaltbild der elektronischen Einrichtungen des erfindungsgemäßen Mehrzweck-Endgeräts. Aus dem Blockschaltbild ist zu erkennen, daß eine Eingabeeinrichtung mit einer Hardcopy-Eingabe 12 zum Eingeben eines Originals 120 vorgesehen ist. Ebenso ist eine Hardcopy-Ausgabe 13 zum Ausgeben ausgefertigter Kopien vorgesehen. Es können mehrere externe Einrichtungen wie eine Datenverarbeitungsanlage 2, ein Textbearbeitungsautomat 3 und ein Kommunikationsnetzt 4 angeschlossen sein. Außerdem ist eine Eingabeund Steuertastatur 11 vorgesehen, die ein Interface-teil mit einer Steuerung 16 zum Steuern und Überwachen elektrischer Informationswege 102 beeinflussen kann und mit der verschiedene Daten eingegeben werden können. Die externen Einrichtungen, nämlich die Datenverarbeitungsanlage 2, der Textbearbeitungsautomat 3 und das Kommunikationsnetz 4 sind über eine Eingabe-/Ausgabeschnittstelle 19 mit dem Mehrzweck-Endgerät 1 verbunden. Diese Eingabe-/Ausgabeschnittstelle 19 ist mit der Steuerung 16 verbunden. Die Steuerung 16 steht außerdem mit einer Abtasteinrichtung 15 und einem Speicher 10 in Verbindung. An die Steuerung 16 ist außerdem eine Rasterzeile 18 über eine Decoder/Treiber-Einrichtung 17 angeschlossen. Der bereits erwähnten Hardcopy-Eingabe 12 ist über einen optischen Informationsweg 101 eine Abzweigung 14 nachgeordnet, mittels derer die in Gestalt des Originals 120 vorliegende optische Information sowohl an die Ausgabeeinrichtung mit der Hardcopy-Ausgabe 13 als auch an die Abtastvorrichtung 15 zur weiteren Bearbeitung bzw. Übertragung dieser optischen Information weitergeleitet wird. Die Hardcopy-Ausgabe 13 ist ferner über einen weiteren optischen Informationsweg 101 mit der bereits erwähnten Rasterzeile 18 verbunden. Der Speicher 10 dient zum Abspeichern von Daten abgetasteter Vorlagen, zum Puffern von von externen Einrichtungen kommenden Daten und zum Zwischenspeichern von Daten während laufender Bearbeitungsvorgänge.

Eingegebene Originale 120 werden in der Hardcopy-Eingabe 12 beleuchtet und eindimensional abgetastet. Dies geschieht in an sich bekannter Weise durch einen Abtastschlitten, der Lampen 121 und einen ersten Spiegel 122 aufweist, vergl. Fig. 2. Das Abbild wird über einen optischen Informationsweg zu einem Schlitten, der zum Ausgleich der optischen Wege in an sich ebenfalls bekannter Weise angeordnet ist, übertragen. Dieser zuletzt genannte Schlitten enthält im wesentlichen einen zweiten Spiegel 123 und einen dritten Spiegel 124, mittels derer die optische Information zu einem Strehlteiler 125 übertragen wird. Dieser Strahlteiler 125 stellt die in dem Blockschaltbild gemäß Fig. 1 gezeigte Abzweigung 14 dar. Der Strahlteiler lenkt den kleineren Prozentsatz der Lichtenergie auf ein Abtastobjektiv 128 um. Der größere Prozentsatz der Lichtenergie wird über ein Hauptobjektiv 126 weitergeleitet. Während des Abtastvorganges bewegt sich der Schlitten mit dem zweiten Spiegel 123 und dem dritten Spiegel 124 in an sich bekannter Weise mit der halben Geschwindigkeit der Spiegel/Lampeneinheit, bestehend aus den Lampen 121 und dem ersten Spiegel 122, vorwärts. Dadurch bleibt der optische Weg zwischen Vorlage und Objektiv während der gesamten Abtastung konstant.

Wie aus Fig. 3 ersichtlich, wird die über das Hauptobjektiv 126 übertragene optische Information direkt auf einen Spiegel 1271 der Hardcopy-Ausgabe 13 gerichtet, der den Lichtstrehl auf eine Trommel 127, die zuvor durch ein sog. Corotron mit einer Ladung versehen wurde, umlenkt. Auf dieser Trommel 127 befindet sich in bekannter Weise eine lichtempfindliche elektrostatische Oberfläche, die durch den Lichteinfall eine diesem entsprechende elektrostatische Ladung annimmt. Durch die Trommeldrehung in der gezeigten Pfeilrichtung durchläuft die jeweils belichtete Stelle eine Tonerstation 1273, in der in aller Regel pulverförmiger Toner durch die elektrostatische Ladung angezogen wird. Über einen Papiervorschub 1275 wird ein Papiervorrat zwischen der Trommel 127 und einer Übergabestation 1274 durchgeführt, wobei die getonerten Stellen der Trommeloberfläche den Toner auf das Papier übertragen. Anschließend durchläuft das Papier eine Fixier- oder Einbrennstation 1276. Die Trommeloberfläche wird anschließend durch eine Anordnung aus einem Reinigungsband 1277 gereinigt. Wie Fig. 3 ebenfalls zu entnehmen ist, besteht eine zweite Moglichkeit, die Trommeloberfläche zu belichten, nämlich von einer Rasterzeile 18 her über eine zusätzliche Objektivanordnung.

Wie bereits erläutert und in Fig. 2 gezeigt, wird ein Teil der Lichtenergie von dem Strahlteiler 125 über ein Abtastobjektiv 128 umgeleitet. Diese optische Verbindung führt zu einer Abtastzeile 129, die im wesentlichen aus der Abtastvorrichtung 15, vgl. Fig. 1, besteht. Diese abtastvorrichtung 15 zerlegt die optische Information in die Bildpunkte repräsentierende elektrische Signale. Für die elektronische Abtastung ist vorteilhafterweise eine Ladungsverschiebeanordnung (Charge Coupled Device) CCD vorgesehen. Die so entstandenen elektrischen Signale werden über einen elektrischen Informationsweg 102 der Steuerung 16 zugeführt. Hier werden sie ggfs. verarbeitet und an das Format der folgenden Rasterzeile 18 oder an Formate, wie sie für eine Verarbeitung in der Datenverarbeitungsanlage 2, dem Textbearbeitungsautomat 3 oder zur Übertragung über das Kommunikationsnetz 4 benötigt werden, angepaßt. Die Steuerung 16 liefert die aufbereiteten Signale an einen Decoder/ Treiber-Einrichtung 17, die die auszugebende Information ggfs. umsetzt und an die Rasterzeile 18 anpaßt. Die Rasterzeile 18 setzt die ihr zugeführte elektrische Information in entsprechende Signale um. Zum Umsetzen der elektrischen in die optische Information werden vorteilhafterweise lichtemittierende Dioden LED in Form eines LED-Array verwendet. Es können jedoch in der Rasterzeile 18 zum Umsetzen von elektrischer in optische Information auch Laserdioden in Form eines Laserdioden-Array verwendet werden. Die lichtemittierenden Dioden LED bzw. die Laserdioden werden zweckmäßigerweise in einer Diodenzeile angeordnet.

Die Dioden können zum Aufbau eines aktiven Dioden-Array zusammen mit zumindest den Treiberstufen der Decoder/Treiber-Einrichtung 17 nach einem Hybridverfahren in einem Block integriert werden. Die einzelnen Dioden Werden dabei mittels eines Schieberegisters, das durch einen von außen zuführbaren Takt getrieben wird, diskret angesteuert. Ein solcher Block ist derart ausgeführt, daß er leicht auszutauschen ist.

Eine weitere Möglichkeit zum Aufbau der Rasterzeile besteht darin, daß die lichtemittierenden Dioden LED bzw. die Laserdioden derart in einer Diodenzeile angeordnet sind, daß die einzelnen Dioden dieser Diodenzeile nach einem an sich bekannten Zeitmultiplexverfahren ansteuerbar sind.

Die notwendigen Treiberstufen sind derart ausgebildet, daß Lichtintensitäts-Schwankungen innerhalb des Array durch eine Stromregelung ausgleichbar sind.

Die bei der Bürokommunikation erforderliche Auflösung kann auf zwei Wegen erreicht werden. Es sind beispielsweise vier Rasterzeilen mit niedriger Auflösung, beispielsweise zwei Punkte/mm, parallel zueinander angeordnet, wobei das Abbild der so entstandenen Rasterzeilen-Parallelanordnung über eine Optik verkleinert wird, so daß eine einzige Zeile mit erhöhter Auflösung auf der Trommel 127 abbildbar ist. Zu einer weiteren Verbesserung der Auflösung ist eine Parallelanordnung von Diodenzeilen mit einer erhöhten Anzahl von, beispielsweise acht, Dioden/mm vorgesehen. Die dafür benötigte Decoder/ Trieber-Einrichtung ist zusammen mit der Parallelanordnung und einer verkleinernden Optik in einem einzigen Block integriert.

Die in der Rasterzeile 18 aus der elektrischen Information gewonnene optische Information wird über einen weiteren optischen Informationsweg der Hardcopy-Ausgabe 13 zugeführt.

Das Interfaceteil, vergl. Fig. 4, enthält einen Mikroprozessor 8 sowie Anpassungsschaltungen für die Eingabe und Ausgabe von Daten 5, 6, einen Programmspeicher 1001, einen Daten- oder Pufferspeicher kleinerer Kapazität 1002 bzw. einen Daten- oder Pufferspeicher größerer Kapazität 1004. Der Programmspeicher 1001 ist zweckmäßigerweise als ROM ausgeführt. Der Daten- oder Pufferspeicher 1002 ist, sofern eine verhältnismäßig kleine Speicherkapazität verlangt ist, als RAM ausgeführt. Für den Fall, daß der Daten- oder Pufferspeicher eine verhältnismäßig große Speicherkapazität benötigt, ist ein Magnetblasenspeicher (Magnetic Bubble Memory) 1004 und eine Steuerung 1003 für diesen Magnetblasenspeicher vorgesehen.

Bei dem Mikroprozessor 8 ist ein Taktgenerator 7 und ein Systemcontroller 9 vorgesehen. Ferner ist eine Seriell-Eingabe-/Ausgabeschnittstelle 5 mit einer Abtastzeile 129 in Verbindung mit einem ersten Kommunikations-Interface 192 und einer weiteren Seriell-Eingabe-/Ausgebeschnittstelle 1931 in Verbindung mit einem zweiten Kommunikations-Interface 193 vorgesehen. Eine vorgesehene Parallel-Eingabe-/Ausgabeschnittstelle 6 besteht aus der bereits erwähnten Eingabe- und Steuertastatur 11 im Zusammenhang mit einem ersten Peripherie-Interface 111, der Rasterzeile 18 in Verbindung mit einer Decoder/Treiberelektronik 182 und einem zweiten Peripherie-Interface 181 sowie einer 8-Bit-Parallel-Eingabe-/Ausgabeschnittstelle 1911 in Verbindung mit einem dritten Peripherie-Interface 191. Die genannten Einrichtungen 5, 6, 9, 1001, 1002 bzw. 1003 können in bekannter Weise über einen Bus 81 miteinander kommunizieren. In die Teileinrichtungen darstellende Blöcke sind die Typenbezeichnungen der verwendeten Schaltkreise eingetragen.

Wie bereits erwähnt, wird die optische Information des Originals 120 beim Anfertigen einer Lokalkopie nach dem Strahlteiler 125 an dem Spiegel 1271 der Hardcopy-Ausgabe 13 reflektiert und auf die Trommel 127 geleitet. Dabei ist die Rasterzeile 18 abgeschaltet. Beim Erstellen einer gerasterten Kopie wird die Rasterzeile 18 von der Steuerung 16 her mit elektrischen Signalen versorgt, wobei der optische Informationsweg 101 zwischen dem dem Strahlteiler 125 nachgeschalteten Hauptobjetiv 126 und der Trommel 127 blockiert ist oder die Hardcopy-Eingabe 12 abgeschaltet ist.

Die Signale, die beim Abtasten eines Originals 120 zum Anfertigen einer Lokalkopie bestehen, können zunächst in den Speicher 10, vergl. Fig. 1, eingeschrieben werden und zu einem späteren Zeitpunkt zum Anfertigen der Lokalkopie ausgelesen werden, so daß beim Erstellen einer gerasterten Kopie keine mechanische Blockierung des optischen Informationsweges erforderlich ist. Zum Überlagern der optischen Informationen zweier oder mehrerer Originale 120 werden diese Originale nacheinander abgetastet. Die jeweils entstehenden Abtastsignale werden in den Speicher 10 eingeschrieben und dort miteinander überlagert. Die derart überlagerten Signale werden zum Anfertigen der Lokalkopie ausgelesen.

Zum Zwecke eines selektiven Löschens von Teilen der in den Speicher 10 eingeschriebenen Abtastsignale wird eine aus entsprechenden Signalen bestehende "Löschschablone" über die Eingabe- und Steuertastatur 11 in den Speicher 10 eingeschrieben, wobei die "Löschschablone" aus "schwarzen" Feldern an den zu löschenden Stellen der gespeicherten Vorlage besteht und wobei der Informationsinhalt der Vorlage mit Hilfe der Steuerung 16 derart umgewertet wird, daß die betreffende Information gelöscht wird.

Von der Datenverarbeitungsanlage 2 oder von dem Textbearbeitungsautomaten 3 codierte Texte werden in den Speicher 10 Seite für Seite eingeschrieben und anschließend über die Rasterzeile 18 ausgedruckt. Zusätzliche Information, wie Datum, Seitenzahl, Archivnummer o.ä. wird direkt über die Eingabe- und Steuertastatur 11 eingegeben und anschließend ausgedruckt.

Zum Zwecke einer abgehenden Übertragung einer Faksimile-Vorlage wird deren optischer Inhalt zunächst abgetastet. Die entstehenden Abtastsignale werden in den Speicher 10 eingeschrieben. Der betreffende Speicherinhalt wird dann zu einem späteren Zeitpunkt über die Eingabe-/Ausgabeschnittstelle 19 an das Kommunikationsnetz 4 gegeben.

Zum Zwecke einer ankommenden Übertragung einer Faksimile-Vorlage werden die deren optischem Inhalt entsprechenden Signale aus dem Kommunikationsnetz 4 an die Eingabe-/Ausgabeschnittstelle 19 gegeben. Dort werden diese Signale angepaßt und in den Speicher 10 eingeschrieben, aus dem sie zu einem späteren Zeitpunkt zum Ausdrucken ausgelesen werden.

Zur Prüfung, ob bei einer Vorlage die Qualität des gerasterten Schriftstücks noch ausreichend ist, falls es als Fernkopie übertragen werden soll, kann vorteilhafterweise eine gerasterte Lokalkopie erstellt werden, deren Daten gleichzeitig in dem Speicher 10 abgespeichert werden. Wenn die visuelle Prüfung ergibt, daß die Qualität ausreichend ist, kann über die Eingabe- und Steuertastatur ein entsprechender Befehl zum Aussenden der gespeicherten Signale über das Kommunikationsnetz 4 gegeben werden.

Die Verwendung eines CCD in der Rasterzeile 18 zum Zerlegen der optischen Information ist deshalb vorteilhaft, weil die Lichtempfindlichkeit eines solchen CCD wesentlich höher als die der xerographischen Trommel ist. Es reicht daher vollkommen aus, die Rasterzeile 18 mit nur einem Bruchteil des für den Kopiervorgang zur Verfügung stehenden Lichtes zu betreiben. Somit besteht die Möglichkeit, mit Hilfe des Strahlteilers 125 die elektronische Abtastung und die Lokalkopie gleichzeitig vorzunehmen. Dies ist beispielsweise vorteilhaft, wenn von einem Schriftstück gleichzeitig eine Fernkopie und eine Lokalkopie angefertigt werden soll.

## Patentansprüche

1. Mehrzweck-Endgerät (1) mit einer Eingabe- und Steuertastatur (11) zum Anschluß an eine Datenverarbeitungsanlage (2) und/oder einen Textbearbeitungsautomaten (3), wobei eine Eingabeeinrichtung mit einer Hardcopy-Eingabe (12) zum Eingeben eines Originals (120) und mit einer optischen Abzweigung (14, 125), mittels derer die in Gestalt des Originals (120) vorliegende optische Information sowohl an eine Ausgabeeinrichtung mit einer Hardcopy-Ausgabe (13) zum Ausgeben von Lokalkopien als auch an eine eine Abtastzeile aufweisende Abtastvorrichtung (15, 129) zur weiteren Bearbeitung bzw. Übertragung dieser optischen Information weitergeleitet wird, vorgesehen ist, welches Mehrzweck-Endgerät bedarfsweise auch mit einem Kommunikationsnetz (4) verbindbar ist, dadurch gekennzeichnet, daß ein durch die Eingabe- und Steuertastatur (11) beeinflußbares Interfaceteil mit einer Steuerung (16) zum Steuern und Überwachen elektrischer Informationswege (102), mit einer Eingabe-/Ausgabeschnittstelle (19), über die das Mehrzweck-Endgerät (1) außer mit der Datenverarbeitungsanlage (2) und/oder dem Textbearbeitungsautomaten (3) auch mit dem Kommunikationsnetz (4) verbindbar ist, und mit einem Speicher (10) zum Abspeichern von Daten abgetasteter Vorlagen (120), zum Puffern von von den externen Einrichtungen (2, 3, 4) kommenden Daten und zum Zwischenspeichern von Daten während laufender Bearbeitungsvorgänge vorgesehen ist, daß ein elektrischer Informationsweg (102) von der Steuerung (16) über eine Decoder/Treiber-Einrichtung (17) zu einer Rasterzeile (18) besteht, daß die Decoder/Treiber-Einrichtung (17) ggf. in Verbindung mit dem Speicher (10) die auszugebende Information an das Format der für die Ausgabe verwendeten Rasterzeile (18) anpaßt, daß in der Rasterzeile (18) zum Umsetzen von elektrischer in optische Information lichtemittierende Elemente in Form einer matrixartigen Anordnung verwendet werden, daß die optische Information des Originals (120) beim Anfertigen einer Lokalkopie nach einem Strahlteiler (125) an einem Spiegel (1271) einer Hardcopy-Ausgabe (13) reflektiert und auf eine Trommel (127) geleitet wird, wobei die Rasterzeile (18) abgeschaltet ist, und daß beim Erstellen einer gerasterten Kopie die Rasterzeile (18) von der Steuerung (16) her mit elektrischen Signalen versorgt wird, wobei der optische Informationsweg (101) zwischen einem dem Strahlteiler (125) nachgeschalteten Hauptobjektiv (126) und der Trommel (127) blockiert ist oder die Hardcopy-Eingabe (12) abgeschaltet ist.

2. Mehrzweck-Endgerät nach Anspruch 1, dadurch gekennzeichnet, daß die Decoder/Treiber-Einrichtung (17) über dem optischen Informationsweg (101) mit einem ersten Informationseingang der Hardcopy-Ausgabe (13) verbunden ist, und daß die Abzweigung (14, 125) unmittelbar über einen weiteren optischen informationsweg (101) mit einem zweiten Informationseingang der Hardcopy-Ausgabe (13) verbunden ist.

3. Mehrzweck-Endgerät nach Anspruch 1, dadurch gekennzeichnet, daß eingegebene Originale (120) in der Hardcopy-Eingabe (12) beleuchtet und eindimensional abgetastet werden und daß die so entstehende optische Information über die Abzweigung (14, 125) und einen optischen Informationsweg (101) der Abtastvorrichtung (15, 129) zugeführt wird, die die optische Information in Bildpunkte repräsentierende elektrische Signale zerlegt.

4. Mehrzweck-Endgerät nach Anspruch 1, dadurch gekennzeichnet, daß in der Rasterzeile (18) zum Umsetzen von elektrischer in optische Information lichtemittierende Dioden LED in Form einer LED-Matrixanordnung verwendet werden.

5. Mehrzweck-Endgerät nach Anspruch 1, dadurch gekennzeichnet, daß in der Rasterzeile (18) zum Umsetzen von elektrischer in optische Information Laser-dioden in Form einer Laserdioden-Matrixanordnung verwendet werden.

6. Mehrzweck-Endgerät nach Anspruch 4 oder 5, dadurch gekennzeichnet, daß die lichtemittierenden Dioden LED bzw. die Laserdioden in einer Diodenzelle angeordnet sind und daß zumindest die Treiberstufen der Decoder/Treiber-Einrichtung (17) mit den lichtemittierenden Dioden LED bzw. den Laserdioden nach einem Hybridverfahren in einem Block integriert sind, der derart ausgeführt ist, daß er leicht auszutauschen ist.

7. Mehrzweck-Endgerät nach Anspruch 4 oder 5, dadurch gekennzeichnet, daß die lichtemittierenden Dioden LED bzw. die Laserdioden in einer Diodenzeile angeordnet sind und daß die einzelnen Dioden dieser Diodenzeile nach einem an sich bekannten Zeitmultiplexverfahren aussteuerbar sind.

8. Mehrzweck-Endgerät nach einem der Ansprüche 4 bis 7, dadurch gekennzeichnet, daß die Treiberstufen derart ausgebildet sind, daß Lichtintensitäts-Schwankungen innerhalb der matrixartigen Anordnung oder des Arrays durch eine Stromregelung ausgleichbar sind.

9. Mehrzweck-Endgerät nach Anspruch 6 oder 7, dadurch gekennzeichnet, daß zum Erreichen einer für die Bürokommunikation geforderten Auflösung eine Anzahl von, beispielsweise vier, Rasterzeilen mit niedriger Auflösung, beispielsweise 2 Punkte/mm, parallel zueinander angeordnet werden und daß das Abbild der so entstandenen Rasterzeilen-Parallelanordnung über eine Optik verkleinert wird, so daß eine einzige Zeile mit erhöhter Auflösung auf einer Trommel (127) abbildbar ist.

10. Mehrzweck-Endgerät nach Anspruch 9, dadurch gekennzeichnet, daß zur weiteren Verbesserung der Auflösung eine Parallelanordnung von Diodenzeilen mit einer erhöhten Anzahl von, beispielsweise acht, Dioden/mm vorgesehen ist und daß die dafür benötigte Decoder/Treiber-Einrichtung zusammen mit der Parallelanordnung und einer verkleinernden Optik in eines einzigen Block integriert ist.

11. Mehrzweck-Endgerät nach einem der Ansprüche 1 bis 3, dadurch gekennzeichnet, daß die Abzweigung (14) im wesentlichen aus einem optischen Strahlteiler (125) besteht, mittels dessen ein geringer Prozentsatz des eintretenden Lichtes in Richtung zu der elektronischen Abtastvorrichtung (15) hin abgelenkt wird.

12. Mehrzweck-Endgerät nach Anspruch 11, dadurch gekennzeichnet, daß für die elektronische Abtastund (15) eine Ladungsverschiebeanordnung (Charge Coupled Device) vorgesehen ist.

13. Mehrzweck-Endgerät nach Anspruch 1, dadurch gekennzeichnet, daß das Interfaceteil einen Mikroprozessor (8) sowie Anpassungsschaltungen für die Eingabe und Ausgabe von Daten (5, 6), einen Programmspeicher (1001), einen Daten- oder Pufferspeicher kleinerer Kapazität (1002) und/oder einen Daten- oder Pufferspeicher größerer Kapazität (1004) enthält.

14. Mehrzweck-Endgerät nach Anspruch 13, dadurch gekennzeichnet, daß der Programmspeicher (1001) ein ROM ist.

15. Mehrzweck-Endgerät nach Anspruch 13, dadurch gekennzeichnet, daß der Daten- oder Pufferspeicher (1002) ein RAM ist.

16. Mehrzweck-Endgerät nach Anspruch 13, dadurch gekennzeichnet, daß der Daten- oder Pufferspeicher (1004) ein Magnetblasenspeicher (Magnetic Bubble Memory) ist und daß zur Steuerung dieses Magnetblasenspeichers eine Magnetblasenspeicher-Steuereinrichtung (1003) vorgesehen ist.

17. Mehrzweck-Endgerät nach Anspruch 1, dadurch gekennzeichnet, daß die Signale, die beim Abtasten eines Originals (120) zum Anfertigen einer Lokalkopie entstehen, zunächst in den Speicher (10) eingeschrieben werden und zu einem späteren Zeitpunkt zum Anfertigen der Lokalkopie ausgelesen werden, so daß beim Erstellen einer gerasterten Kopie keine mechanische Blockierung des optischen Informationsweges erforderlich ist.

18. Mehrzweck-Endgerät nach Anspruch 17, dadurch gekennzeichnet, daß zum Überlagern der optischen Informationen zweier oder mehrerer Originale (120) diese Originale nacheinander abgetastet werden, daß die jeweils entstehenden Abtastsignale in den Speicher (10) eingeschrieben und miteinander überlagert werden und daß die derart überlagerten Signale zum Anfertigen der Lokalkopie ausgelesen werden.

19. Mehrzweck-Endgerät nach Anspruch 18, dadurch gekennzeichnet, daß zum Zwecke eines selektiven Löschens von Teilen der in den Speicher (10) eingeschriebenen Abtastsignale eine aus entsprechenden Signalen bestehende "Löschschablone" über die Eingabe- und Steuertastatur (11) in den Speicher (10) eingeschrieben wird, wobei die "Löschschablone" aus "schwarzen" Feldern an den zu löschenden Stellen der gespeicherten Vorlage besteht und wobei der Informationsinhalt der Vorlage mit Hilfe der Steuerung (16) derart umgewertet wird, daß die betreffende Information gelöscht wird.

20. Mehrzweck-Endgerät nach einem oder mehreren der vorhergehenden Ansprüche, dadurch gekennzeichnet, daß von der Datenverarbeitungsanlage (2) oder von dem Textbearbeitungsautomaten (3) codierte Texte in den Speicher (10) Seite für Seite eingeschrieben und anschließend über die Rasterzeile (18) ausgedruckt werden und daß zusätzliche Information, wie Datum, Seitenzahl, Archivnummer o.ä. direkt über die Eingabe- und Steuertastatur (11) eingegeben und anschließend ausgedruckt wird.

21. Mehrzweck-Endgerät nach einem oder mehreren der Ansprüche 1 bis 19, dadurch gekennzeichnet, daß zum Zwecke einer abgehenden Übertragung einer Faksimile-Vorlage deren optischer Inhalt zunächst abgetastet wird und die entstehenden Abtastsignale in den Speicher (10) eingeschrieben werden und daß der betreffende Speicherinhalt über die Eingabe-/Ausgabeschnittstelle (19) an das Kommunikationsnetz (4) gegeben wird.

22. Mehrzweck-Endgerät nach einem oder mehreren der Ansprüche 1 bis 19, dadurch gekennzeichnet, daß zum Zwecke einer ankommenden Übertragung einer Faksimile-Vorlage die deren optischen Inhalt entsprechenden Signale aus dem Kommunikationsnetz (4) an die Eingabe-/Ausgabeschnittstelle (19) gegeben werden und daß die in der Eingabe-/Ausgabeschnittstelle (19) angepaßten Signale in den Speicher (10) eingeschrieben werden, aus dem sie zu einem späteren Zeitpunkt zum Ausdrucken ausgelesen werden.

**Revendications**

1. Terminal (1) à usages multiples comportant un clavier d'entrée et de commande (11) permettant le raccordment à une installation (2) de traitement de données et/ou à un automate (3) de traitement de textes, et dans lequel il est prévu un dispositif d'introduction comportant un appareil (12) d'introduction de copies papier servant à introduire un original (120), et un dispositif d'aiguillage optique (14, 121) à l'aide duquel l'information optique présente sous la forme de l'original (120) est retransmise aussi bien à un dispositif de sortie comportant un appareil (13) de sortie des copies papier, servant à délivrer des copies locales, ainsi qu'un dispositif d'exploration (15, 129) comportant une ligne de balayage et servant à réaliser le traitement ou la transmission ultérieure de cette information optique, ce terminal à usages multiples pouvant être également relié en cas de besoin à un réseau de communication (4), caractérisé par le fait qu'il est prévu une partie d'interface, pouvant être influencée par le clavier d'entrée de commande (11) et comportant un dispositif de commande (16) servant à commander et à contrôler des voies électriques (102) de transmission de l'information, une interface d'entrée/sortie (19) par l'intermédiaire de laquelle le terminal à usages multiples (1) peut être relié non seulement à l'installation (2) de traitement des données et/ou à l'aumate (3) de traitement de textes, mais également au rémeau de communication (4), et une mémoire (10) servant à la mémorisation de données d'originaux (120) explorés au stockage temporaire de données arrivant des dispositifs externes, (2, 3, 4) et à la mémorisation intermédiaire des données pendant des processus de traitement en cours, ou'une voie électrique (102) de transmission d'informations relie le dispositif de commande (16) à une ligne de trame (18) par l'intermédiaire d'un dispositif (17) à décodeur/étages d'attaque, que le dispositif (17) à décodeur/étages d'attaque adapte, éventuellement en liaison avec la mémoire (10), l'information devant être délivrée, au format de la ligne de trame (18) utilisée pour la sortie, que dans la ligne de trame (18), des éléments photoluminescents sous la forme d'un dispositif matriciel sont utilisés pour la conversion d'une information électrique en une information optique, que lors de la réalisation d'une copie locale, l'information optique de l'original (120) est réfléchie, après avoir traversé un diviseur de faisceau (125), vers un miroir (12, 171) d'un appareil (13) de sortie de copies papier et est envoyé à un tambour (127) alors que la ligne de grille (18) est débranchée, et que lors de l'établissement d'une copie tramée, la ligne de trame (18) est alimentee par des signaux électriques provenant du dispositif de commande (16), alors que la voie optique (101) de transmission d'information située entre un objectif principal (126), branché en aval du diviseur de faisceau (125), et le tambour (127) est bloquée ou que le dispositif (12) d'entrée de copies papier est débranché.

2. Terminal à usages multiples suivant la revendication 1. caractérisé par le fait que le dispositif (17) à décodeur/étages d'attaque est relié par

l'intermédiaire de la voie optique (101) de transmission d'informations à une première entrée d'information de l'appareil (13) de sortie de copies papier, et que le dispositif d'aiguillage (14, 125) est relié directement par l'intermédiaire d'une autre voie optique (101) de transmission d'informations, à une seconde entrée de l'information de l'appareil (13) de sortie des copies papier.

3. Terminal à usages multiples suivant la revendication 1, caractérisé par le fait que des originaux (120) introduits dans le dispositif (12) d'introduction de copies papier sont éclairés et explorés d'une manière unidimensionnelle et que l'information optique ainsi obtenue est envoyée par l'intermédiaire du dispositif de guidage (14, 125) et d'une voie optique (101) de transmission d'informations aux dispositifs d'exploration (15, 129) qui subdivisent l'information optique en des signaux électriques représentant des points d'image.

4. Terminal à usages multiples suivant la revendication 1, caractérisé par le fait qu'on utilise des diodes photoémissive LED sous la forme d'un dispositif matriciel, dans la ligne de trame (18) pour convertir une information électrique en une information optique.

5. Terminal à usages multiples suivant la revendication 1, caractérisé par le fait qu'on utilise des diodes laser sous la forme d'un dispositif matriciel, dans le ligne de trame (18), pour la conversion d'une information électrique en une information optique.

6. Terminal à usages multiples suivant la revendication 4 ou 5, caractérisé par le fait que les diodes photoémissives LED ou les diodes laser sont disposées suivant une rangée de diodes et qu'au moins les étages d'attaque du dispositif (17) à décodeur/circuit d'attaque sont intégrés, avec les diodes photoémissives LED ou les diodes laser selon un procédé hybride, dans un bloc qui est réalisé de manière à pouvoir être aisément remplacé.

7. Terminal à usages multiples suivant la revendication 4 ou 5, caractérisé par le fait que les diodes photoémissives LED ou les diodes laser sont disposées suivant une rangée de diodes et que les différentes diodes de cette rangée de diodes peuvent être commandées selon un procédé de multiplexage temporel connu en soi.

8. Terminal à usages multiples suivant l'une des revendications 4 à 7, caractérisé par le fait que les étages d'attaque sont agencés de telle sorte que les variations de l'intensité lumineuse à l'intérieur du dispositif matriciel ou du réseau peuvent être compensées par une régulation du courant.

9. Terminal à usages multiples suivant les revendications 6 ou 7, caractérisé par le fait que pour l'obtention d'une résolution requise pour la communication de bureau, un certain nombre de lignes de trame, par exemple quatre lignes de trame, sont disposées parallèlement les unes aux autres avec une faible résolution de par exemple deux points/mm, et que l'image de la disposition en parallèle ainsi obtenue de la ligne de trame est réduite par l'intermédiaire d'un système optique, de sorte qu'on peut former, avec une résolution accrue, l'image d'une seule ligne sur un tambour (127).

10. Terminal à usages multiples suivant la revendication 9, caractérisé par le fait que pour améliorer plus encore la résolution, il est prévu une disposition en parallèle de rangées de diodes avec un nombre accru de par exemple huit diodes/mm et que le dispositif à décodeur/étages d'attaque nécessaire à cet effet est intégré ainsi que le montage en parallèle des diodes et une système optique réducteur sous la forme d'un bloc unique.

11. Terminal à usages multiples suivant l'une des revendications 1 à 3, caractérisé par le fait que le dispositif d'aiguillage (14) est constitué essentiellement par un diviseur optique de faisceau (124), à l'aide duquel un faible pourcentage de la lumière incidente est dévié en direction du dispositif d'exploration électronique (15).

12. Terminal à usages multiples suivant la revendication 11, caractérisé par le fait qu'un dispositif à transfert de charges (Charge Coupled Device) est prévu comme dispositif d'exploration électronique (15).

13. Terminal à usages multiples suivant la revendication 1, caractérisé par le fait que la partie d'interface contient un microprocesseur (8) ainsi que les circuits d'adaptation pour l'entrée et la sortie de données (5, 6), une mémoire de programmes (1001), une mémoire de données, une mémoire tampon de capacité réduite (1002) et/ou une mémoire de données ou une mémoire tampon de capacité plus importante (1004).

14. Appareil terminal à usages multiples suivant la revendication (13) caractérisé par le fait que la mémoire de programmes (1001) est une ROM.

15. Terminal à usages multiples suivant la revendication 13, caractérisé par le fait que la mémoire de données ou la mémoire tampon (1002) est une RAM.

16. Terminal à usages multiplex suivant la revendication 13, caractérisé par le fait que la mémoire de données ou la mémoire tampon (1004) est une mémoire à bulles magnétiques (Magnetic Bubble Memory) et qu'il est prévu un dispositif (1003) de commande de cette mémoire à bulles magnétiques.

17. Terminal à usages multiples suivant la revendication 1, caractérisé par le fait que les signaux, qui apparaissent lors de l'exploration d'un original (120) pour la réalisation d'une copie locale, sont enregistrés tout d'abord dans la mémoire (10) et sont lus, à un instant ultérieur, pour l'établissement de la copie locale, de sorte que lors de l'établissement d'une copie tramée, aucun blocage mécanique de la voie optique de transmission d'informations n'est nécessaire.

18. Terminal à usages multiples suivant la revendication 17, caractérisé par le fait que pour réaliser lu superposition des informations optiques de deux ou de plusieurs originaux (120), en explore successivement ces originaux, qu'on enregistre les signaux d'exploration respectivement obtenus dans la mémoire (10) et qu'on les superpose les une aux autres et qu'on effectue la lecture de tels signaux superposés, pour réaliser la copie locale.

19. Terminal à usages multiples suivant la revendication 18, caractérisé par le fait que dans le but d'effacer de façon sélective des parties des signaux d'exploration enregistrés dans lu mémoire (10), en enregistre dans cette mémoire (10) un "gabarit d'effacement" constitué par des signaux correspondants par l'intermédiaire du clavier de commande (11), le "gabarit d'effacement" étant constitué par des zones "noires" aux emplacements devant être effacés de l'original mémorisé et le contenu en informations de l'orignal étant converti à l'aide du dispositif de commande (16) de manière que l'information concernée est effacée.

20. Terminal à usages multiples suivant une ou plusieurs des revendications précédentes, caractérisé par le fait que des textes codés par l'installation (2) de traitement de données ou par l'automate (3) de traitement de textes, sont enregistrées page par page dans la mémoire (10) et sont ensuite imprimés par l'intermédiaire de la ligne de trame (18) et qu'une information supplémentaire, telle qu'une donnée, un numéro de page, un numéro d'archive ou analogue, est introduit directement par l'intermédiaire du clavier d'entrée et de commande (11) et est ensuite imprimé.

21. Appareil terminal à usages multiples suivant une ou plusieurs des revendications 1 à 19, caractérisé par le fait qu'en vue de réaliser une transmission de départ d'un original de facsimilé, on explore tout d'abord son contenu optique et on enregistre dans la mémoire (10) les signaux de balayage apparaissants, et que le contenu considéré de la mémoire est transmis au réseau de communication (4) par l'intermédiaire de l'interface d'entrée/sortie 19.

22. Terminal à usages multiples suivant une ou plusieurs des revendications 1 à 19, caractérisé par le fait qu'en vue de réaliser une transmission d'arrivée d'un original de fac-similé, les signaux correspondant à son contenu optique sont envoyés depuis le réseau de communication (4) à l'interface d'entrée/sortie (19) et que les signaux adaptés dans l'interface d'entrée/sortie (19) sont enregistrés dans la mémoire (10), d'où ils sont extraits par lecture à un instant ultérieur, en vue de leur impression.

**Claims**

1. A multiple-purpose terminal apparatus (1) having an input and control keyboard (11) for the connection to a data processing apparatus (2) and/or a text processing automaton (3), wherein is arranged an input device with a hardcopy input (12) for the input of an original (120) and with an optical branch (14, 125), by means of which the optical information, which is present in the form of the original (120), is transferred both to an output device with a hardcopy output (13) for the output of local copies and also to a scanning device (15, 129) which has a scanning line unit and serves to further process or transmit the optical information, which multiple-purpose terminal can also be connected to a communications network (4) if required, characterised in that an interface component, which can be influenced by the input and control keyboard (11), can be connected to a control unit (16) for controlling and monitoring electrical information paths (102) to an input/output intersection (19), by means of which the multiple-purpose terminal (1) can also be connected to the communications network (4) in addition to the data processing apparatus (2) and/or the text processing automaton (3), and to a store (10) for storing data of scanned originals (12), for buffering data coming from the external devices (2, 3, 4) and for intermediately storing data during running processing operations, that there is an electrical information path (102) from the control unit (16) via a decoder/driver device (17) to a scan line unit (18), that the decoder/driver device (17) possibly in association with the store (10) matches the information to be output to the format of the scan line unit (18) which is to be used for the output, that light-emitting elements in the form of a matrix-like arrangement are used in order to convert electrical information into optical information in the scan line unit (18), that during the production of a local copy, following a beam divider (125), the optical information of the original (120) is reflected on a mirror (1271) of a hardcopy output (13) and transferred on to a drum (127), the scan line unit (18) being switched off, and that when producing a scanned copy the scan line unit (18) is supplied with electrical signals from the control unit (16), where the optical information path (101) between a main objective (126), which is connected following the beam divider (125), and the drum (127) is blocked or the hardcopy input (12) is switched off.

2. A multiple-purpose terminal as claimed in claim 1, characterised in that the decoder/driver device (17) is connected to a first information input of the hardcopy output (13) by means of the optical information path (101), and that the branch (14, 125) is directly connected to a second information input of the hardcopy output (13) by means of a further optical information path (101).

3. A multiple-purpose terminal as claimed in claim 1, characterised in that input originals (120) are illuminated in the hardcopy input (12) and one-dimensionally scanned and that the optical information, which is formed in this manner, is fed to the scanning device (15, 129) which resolves the optical information into electric signals representing the image dots, by means of the branch (14, 125) and an optical information path (101).

4. A multiple-purpose terminal as claimed in claim 1, characterised in that in the scan line unit (18), light-emitting diodes LED in the form of an LED-matrix arrangement are used for the conversion of electrical information into optical information.

5. A multiple-purpose terminal as claimed in claim 1, characterised in that in the scan line unit (18), laser diodes in the form of a laser diode matrix arrangement are used for the conversion of electrical information into optical information.

6. A multiple-purpose terminal as claimed in claim 4 or 5, characterised in that the light-emitting diodes LED or the laser diodes are arranged in a diode line and that following a hybrid process at least the driver stages of the decoder/driver device (17) are integrated with the light-emitting diodes LED or the laser diodes in a block which is constructed to be such that it can be easily exchanged.

7. A multiple-purpose terminal as claimed in claim 4 or 5, characterised in that the light-emitting diodes LED or the laser diodes are arranged in a diode line and that the individual diodes of the diode line are controllable in accordance with a t.d.m process which is known *per se*.

8. A multiple-purpose terminal as claimed in one of claims 4 to 7, characterised in that the driver stages are designed in such a manner that fluctuations in the light intensity within the matrix-like arrangement or the array can be compensated by means of a current control.

9. A multiple-purpose terminal as claimed in claim 6 or 7, characterised in that in order to achieve a resolution, which is required for office communication, a number of, for example, four scan lines of a low resolution, for example 2 dots/mm, are arranged parallel to one another and that the copy of the scan line parallel arrangement, which is produced in this manner, is reduced by means of an optical system, so that one single line of increased resolution can be reproduced on a drum (127).

10. A multiple-purpose terminal as claimed in claim 9, characterised in that in order to further improve the resolution there is provided a parallel arrangement of diode lines having an increased number of, for example, eight diodes/mm and that the decoder/driver device, which is required therefor, together with the parallel arrangement and a reduced optical system is integrated in a single block.

11. A multiple-purpose terminal as claimed in one of claims 1 to 3, characterised in that the branch (14) essentially comprises an optical beam divider (125), by means of which a small percentage of the incident light is deflected in the direction towards the electronic scanning device (15).

12. A multiple-purpose terminal as claimed in claim 11, characterised in that a charge-coupled device is arranged for the electronic scanning (15).

13. A multiple-purpose terminal as claimed in claim 1, characterised in that the interface component comprises a microprocessor (8) and adaptation circuits for the input and output of data (5,6), a programme store (1001), a data or buffer store of smaller capacity (1002) and/or a data or buffer store of larger capacity (1004).

14. A multiple-purpose terminal as claimed in claim 13, characterised in that the programme store (1001) is a ROM.

15. A multiple-purpose terminal as claimed in claim 13, characterised in that the data or buffer store (1002) is a RAM.

16. A multiple-purpose terminal as claimed in claim 13, characterised in that the data or buffer store (1004) is a magnetic bubble memory and that a magnetic bubble memory control device (1003) is provided for the control of the magnetic bubble memory.

17. A multiple-purpose terminal as claimed in claim 1, characterised in that the signals, which are produced when scanning an original (120) for preparing a local copy, are firstly written into the store (10) and read out at a later time for preparing the local copy, so that when producing a scanned copy mechanical blocking of the optical information path is not required.

18. A multiple-purpose terminal as claimed in claim 17, characterised in that in order to superimpose the optical information of two or more originals (120) the originals are consecutively scanned, that the respectively formed scanning signals are written into the store (10) and mutually superimposed and that the signals, which are superimposed in this manner, are read out in order to prepare the local copy.

19. A multiple-purpose terminal as claimed in claim 18, characterised in that for the purpose of a selective erasure of parts of the scanning signals, which are written into the store (10) an "erasing pattern" which comprises appropriate signals, is written into the store (10) by means of the input and control keyboard (11), where the "erasing pattern" comprises "black" fields at the points of the stored original which are to be erased and where the information content of the original is converted with the aid of the control unit (16) in such manner that the respective information is erased.

20. A multiple-purpose terminal as claimed in one or more of the preceding claims, characterised in that texts, which are coded by the data processing apparatus (2) or by the text processing automaton (3), are written into the store (10) side by side and subsequently printed out by means of the scan line unit (18) and that additional information, such as date, page number, archive number or similar are directly input by means of the input and control keyboard (11) and subsequently printed out.

21. A multiple-purpose terminal as claimed in one or more of claims 1 to 19, characterised in that for the purpose of an outgoing transmission of a facsimile original the optical content thereof is firstly scanned and the formed scanning signals are written into the store (10) and that the respective store content is transferred to the communications network (4) by means of the input/output intersection (19).

22. A multiple-purpose terminal as claimed in one or more of claims 1 to 19, characterised in that for the purpose of an incoming transmission of a facsimile original the signals, which correspond to the optical contents of said original, from the communications network (4) are tarnsmitted to the input/output intersection (19) and that the signals adapted in the input/output intersection (19) are written into the store (10), from which they are read out at a later time for final printing.

## FIG1

## FIG2

## FIG 3

## FIG 4